# EUROPEAN PATENT SPECIFICATION

(11) **EP 3 293 781 B1**
(45) Date of publication and mention of the grant of the patent: **22.11.2023**
(21) Application number: 17189917.2
(22) Date of filing: 21.12.2004
(51) Int. Cl.: B22D 25/04, H01M 50/172, H01M 50/552, H01M 10/06

(54) **BATTERY PART**
BATTERIETEIL
PIÈCE DE BATTERIE

(30) Priority: 02.01.2004 US 533924 P; 18.03.2004 US 804401; 13.12.2004 US 11362
(43) Date of publication of application: 14.03.2018
(62) Divisional of application: 10196207.4
(73) Proprietor: WATER GREMLIN COMPANY, White Bear Township, MN 55110 (US)
(72) Inventor: RATTE, Robert, W., North Oaks, MN Minnesota 55127 (US); PETERSON, Norman, E., Wyoming, MN Minnesota 55092 (US)
(74) Representative: Modiano, Gabriella Diana

(56) References cited:
- WO-A1-88/00099
- DE-A1- 4 206 439
- GB-A- 801 628
- GB-A- 1 245 255
- US-A- 4 168 618
- US-A- 4 257 250
- US-A- 4 296 546
- US-A- 5 296 317
- US-A- 5 971 663

## Description

### FIELD OF THE INVENTION

This invention relates generally to battery parts and, more specifically, to a battery part and a method of flaring an acid ring to form an enhanced sealing region with minimized opportunities for stress cracks in the battery part .

### BACKGROUND OF THE INVENTION

Battery parts such as battery terminals, which are typically cold formed or die cast, are normally secured to a container with a portion of the battery terminal located inside the container and a further portion located outside the container. The battery containers, which are typically plastic such as polyethylene, are molded around a set of acid rings that are located on the portion of the terminal that is located within the container. The acid rings provide an extended interface and consequently a tortuous path to inhibit or prevent electrolyte from escaping from the battery container. Because the acid must follow an extended interface to escape this type of sealing, with a set of concentric acid rings, is often referred to as a labyrinth seal.

Because the battery terminals are cast or cold formed the radially protruding acid rings are generally formed with either a rectangular cross sectional shape or a slight outward taper to facilitate removal of the battery terminals from the mold.

While battery terminals have a generally rectangular cross sectional shape are used extensively other shaped acid rings have been used in order to prevent the plastic container from shrinking away from the terminal and upsetting the interface between the battery part and the container which could cause leakage of electrolyte. Generally, these type of acid rings provide lateral engagement between the acid ring and the container.

For example, the 1971 United Kingdom patent specification GB 1236495 discloses a battery terminal wherein two acid ring are bent toward each other to provide a dovetail shaped gap that extends along the entire length of the acid ring so that it enables the two adjacent acid rings to form a dovetail joint with the battery container and thereby provide lateral engagement between the acid ring and the container.

The 1971 United Kingdom patent specification GB 1,245,255 discloses three acid rings that have been deformed to create a dovetail shaped gap between adjacent acid rings with the dovetail gap extending along the entire length of the acid ring to form two dove tail joints with the container and thereby provide lateral engagement between the acid ring and the container. In this embodiment the acid rings are compressed sufficiently to deform the acid rings so that the acid ring tapers inwardly along the entire length of the ring, that is from the circumferential edge of the acid ring to the base of the acid ring.

The 1981 Japanese patent JP56159054 discloses a further embodiment wherein the battery terminal acid rings are deformed along the entire length of the acid ring to form inclined projections on the acid rings that engages the cover to provide effective liquid tightness and thereby provide lateral engagement between the acid ring and the container.

The 1993 Hofmann German patent DE 4127956 A1 discloses a battery terminal wherein the ends of the acid rings have been rounded and the lower acid ring has been provided with a wedge shaped profile to increase the sealing effect with a container and thereby provide lateral engagement between the acid ring and the container.

The 1994 Hofmann German patent DE 4241393 C1 discloses a battery terminal wherein the ends of the acid rings have been rounded and a barb or undercut that forms a hook which is located on the back side of the acid ring. The "hook" on the back side of the deformed acid ring hooks into the plastic container i.e. to lateral restrain the container to prevent the plastic battery container material from shrinking away from the battery terminal. In addition, a further embodiment is disclosed wherein adjacent acid rings are of the same thickness but are angled away from each other in order to laterally restrain the container with respect to the acid rings.

The 1992 Hofmann European patent 0 601 268 B1 discloses a battery terminal wherein the ends of the acid rings either have a rounded end or a triangular shaped end with a barb or hook on the back side of the acid ring. This "hook" on the back side of the deformed acid ring hooks the plastic to prevent the plastic battery container material from shrinking away from the battery terminal by laterally restraining the container with respect to the acid rings.

The 1992 Hofmann European patent application 0 601 268 A1 also discloses the battery terminal wherein the ends of the acid rings either have a rounded end or a triangular shaped end with a barb or undercut or hook on the back sides of the acid ring. In addition, a further embodiment of an acid ring is disclosed wherein two adjacent acid rings, which are of the same thickness, are angled away from each other to laterally restraining the container with respect to the acid rings by forming a dovetail like joint.

The 1989 Hofmann German patent application DE 3942175A1 discloses a method of forming a battery terminal with acid rings by cold rolling the terminal to form the circumferential acid rings.

U.S. Speigelberg patent 6,644,084 describes a process of forming an acid ring with a hook by first deforming the battery terminal from a rectangular shaped acid ring to an arrowhead shaped acid ring. The transformation to the hook shape is obtained by rotating the battery terminal relative to a cold forming roller to deform an acid ring with a rectangular cross section into an acid ring having an undercut or overhang. The cold rolling process involves substantial deformation of the acid ring on the cast battery part in order to produce the hook for engaging the battery container.

While the prior art provides acid rings with rectangular shapes that are either bent or transformed into a different shape by cold rolling to form a lateral restraint between the battery container and the terminal. The lateral restraint is obtained by either forming a hook on the acid ring or forming a dovetail or dovetail like engagement between the battery container and the battery terminal.

In contrast to the prior art acid rings, where the shape of the acid ring is substantially altered, in the present invention one can cast a battery part with the acid ring having a bifurcated end separated by a circumferential grove or an end with a single annular tapered lip. The bifurcated end results in two outwardly extending annular lips on each acid ring. The annular lips on each acid ring can be flared away from each other to produce a beveled surface or sealing bead along an annular outer portion of each of the annular lips which not only laterally restrains the container with respect to the terminal but also forms an enhanced sealing region between the container and the acid ring. In addition the circuitous path provided by the bifurcated acid rings can increase the resistance to electrolyte leakage by providing a more tortuous interface between the acid rings and the container.

A further feature of the invention is the flaring of the lips can be obtained by applying a radial compressive force to the bifurcated ends of the acid ring. Since only the bifurcated ends of the acid ring are flared it substantially eliminates problems that can occur with prior art cold forming deformation of a pressure cast battery terminal. That is, an interface between a die cast portion of battery terminal and a cold rolled portion of the battery terminal can lead to cracks or stress areas between the cast region and the cold formed region of the battery part, which can be subject to electrolyte leakage therethrough. By minimizing the interface one can minimize the opportunity for leakage.

Thus the flaring of the lips on the bifurcated acid ring of the present invention produces a back flare sealing region that extends circumferential around the terminal which not only enhances sealing but also restrains lateral engagement between the container and the acid rings and at the same time minimizing the occurrences of fractures or stress cracks in metal that has a portion of the original die cast shape altered by cold rolled deformation.

The present invention provides a battery part that eliminates the substantial deformation or acid ring transformation necessary to either form an under cut or overhang on the acid ring or to deform an acid ring along its entire length to form a dovetail engagement as shown in GB 1236495; GB 1,245,255; JP 5619054 and EPO 06012681A1. In addition, the present invention further eliminates the need to mechanically deform the acid ring from a rectangular shape to an arrow head shaped acid ring or to an acid ring with a hook or an acid ring with a beveled surface that extends along the entire length of the acid ring as shown in EPO06012681B1 and DE 4241393; A battery part manufacturing system is further shown also e.g. in US5296317 A.

Thus, by flaring the lip or lips on the circumferential end of the acid ring one can form annular sealing regions, laterally restrain the container with respect to the acid ring, and inhibit electrolyte from escaping from the battery container with a more tortuous path. Not only does the present invention inhibit escape of electrolyte by providing a circumferential sealing ring it also make it easier to flow the plastic around the acid ring since the flared lip extends along only a portion of the acid ring. In addition, the present process minimizes stress produced in the battery part when a substantial part of a die cast battery terminal is subsequently transformed to a substantially different shape by cold rolling since the lips on the end of the acid ring can be flared instead of mechanically deformed into an entirely different shape.

### SUMMARY OF THE INVENTION

The present invention is defined by the present independent claim 1, as well as by the present independent claim 9.

Briefly, the invention comprises a battery part with a bifurcated acid ring end and a beveled end face. The invention further includes the method of forming a battery terminal with an end face of the acid ring having a bifurcated end and a beveled face that permits one to use the battery terminal in an as is condition or in a flared condition wherein the lips on the bifurcated end of the acid ring can be flared to form a beveled sealing region that functions like an "O-ring" on the backside of the lip of the acid ring.

### BRIEF DESCRIPTION OF THE DRAWINGS

Figure 1 is a partial cross sectional view of a battery terminal with bifurcated acid rings;
Figure 2 is a partial cross sectional view of a chamber having a fluidized particles that impinge on a battery part therein;
Figure 3 is a partial cross sectional view of the battery terminal of Figure 1 after being exposed to the fluidized media or particles as illustrated in Figure 2;
Figure 4 is a partial side view showing radial peening members for folding over the ends of the bifurcated acid rings on a battery terminal;
Figure 5 is a top view of three radial peening members located around the periphery of a the a battery terminal with bifurcated acid rings;
Figure 6 is a partial side view of a battery terminal having a set of acid rings with a valley or groove in the end face of the acid rings;
Figure 7 is a top view of the battery terminal of Figure 8 in a collet;
Figure 7A is a sectional side view showing the beveled surfaces and the lateral surface on an acid ring with bifurcated lips;
Figure 7B is an enlarged view of a portion of the acid rings to reveal the beveled sealing surfaces on the acid ring; and
Figure 8 is a partial side view of the battery terminal of Figure 6 in a collet in an expanded condition;
Figure 9 is a partial side of the battery terminal and collet when the collet is partially contracted;
Figure 10 is a partial side view of the battery terminal of Figure 6 when the collet is in a contracted condition;
Figure 11 is a partial side view of the battery terminal of Figure 6 with the acid rings having been deformed by the collet;
Figure 12 is side view of an alternate embodiment wherein the acid **r**ing is formed with a single lip on each acid ring;
Figure 13 shows a tapered collet for deformed the battery terminal;
Figure 14 shows a partial cross section view of a set of acid rings that have been deformed by the collet of Figure 13.

### DESCRIPTION OF THE PREFERRED EMBODIMENT

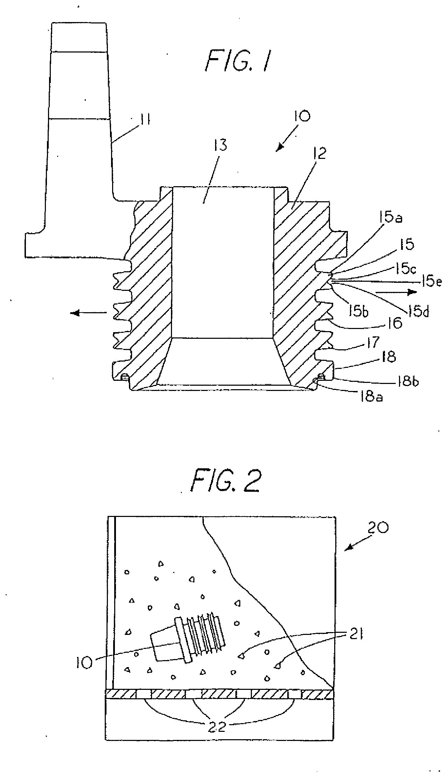

Figure 1 shows a battery part 10 comprising a battery terminal having an upward extending lug 11 and a hollow base 12 having a central opening 13 therein. Located around the exterior of battery terminal 10 is a set of bifurcated annular acid rings 15, 16, 17, and 18 that have been formed by a die casting process. That is, a segmented mold (not shown) which radially surrounds the sides of battery part 10 during the casting process has been pulled radially away from the battery part 10 to release the battery part from the mold. Due to the configuration of the battery part and the need to pull the side mold parts radially or laterally away from the terminal the intermediate acid rings 15, 16 and 17 are oftentimes each provided with a slight tapered. Each of the acid rings 15, 16 and 17 have been cast with an annular V shaped groove located in the end of each of the acid rings. The placement of the groove in the end of acid ring generates a bifurcated circumferential end to the acid ring with each of the bifurcated ends including radially extending annular lips which are located along the opposite lateral faces of the acid rings 15, 16 and 17, Thus, a feature of the present invention is a battery terminal wherein the cast battery terminals comprising a bifurcated acid ring 15 with a die cast upper annular lip 15a and a die cast lower annular lip 15b. The end face of each of the acid rings are shown with an interior side surface or a bevel face 15c and interior side surface or a bevel face 15b that are joined at the root of the acid ring to form a V shaped annular groove 15e. Similarly, each of the bifurcated acid rings 16 and 17 have identical lips that form an apex at the root of the lips and a V shaped annular groove on the periphery of the annular acid ring.

In the embodiment shown in Figure 1 the lower acid ring 18 is provide with an undercut 18a which can be formed by an end mold (not shown) that coacts with the side molds. That is, the end mold can be used to form the annular downward extending lip 18b since the end mold can be moved axially away from the end of the mold when the battery part is released from the mold.

Thus a feature of the present invention is the ability to cast a battery terminal wherein after the casting process has been completed at least one of the acid rings contains a lip or overhang 18b that can be used to seal the battery terminal to a battery container. Although an overhang 18 can be cast with the present process of forming bifurcated acid rings one may elect not to cast a terminal with an overhang and instead use only the flared bifurcated ends of the acid rings to maintain the sealing relationship between the container and the terminal.

Figure 2 illustrates the battery terminal 10 located in a fluidized bed having particles 21 that impinge on the exterior surfaces or beveled end face of the acid rings 15, 16 and 17 of the battery terminal through the introduction of fluid through lower openings 22. The impingement of the particles, which are preferably harder than the battery part, provide a two-fold effect. The first effect is that the particles impinging the battery part can polish the exterior surface of the battery part. The second effect is that it has been found that the impingement of particles on the beveled end surfaces of the acid ring can causes the lips of annular acid rings to fold over or flare out and create a beveled sealing region or sealing bead much like an O-ring on the lateral face of the acid rings. Thus, a feature of the present invention is that one eliminates the need to form a "hook like" connection between the battery terminal and the battery container or to deform the entire acid ring into a dovetail.

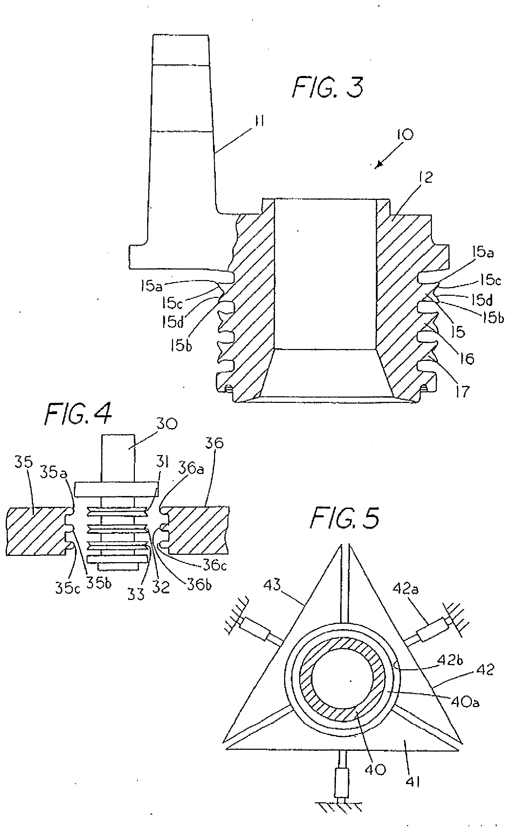

A reference to Figure 3 shows how battery part 10 appears after being subjected to impingement from fluidized particles. To illustrate the folding or flaring of the annular lip reference should be made to acid ring 15 which shows lip 15a curved upward and lip 15b curved downward. That is, the impingement of particles on the bevel surface 15c and 15d occurs with sufficient force so that the annular lips 15a and 15b are flared outward to thereby creating a sealing region on the backside thereof for sealing engaging and restraining a battery container without the need for forming a hook on the battery part. Since the angled surfaces 15c and 15d transmit a portion of the force in an axial direction the lip can be flared or folded outward through the radial impingement of particles on the angled surfaces 15c and 15d. As each of the bifurcated annular rings 16 and 17 have identical annular lips each of the bifurcated annular rings 16 and 17 produce a sealing region on the lateral face of the acid sealing rings for sealing engagement between container and terminal while laterally restraining a battery container with respect to the terminals without the use of a hook which could trap air therein during the formation of the container and consequently produce regions with enhanced risk of electrolyte leakage. However, if the lips are flared outward slightly to produce a sealing bead the trapped air can flow smoothly outward during the molding process and one need not be concerned with air being trapped in a "hook" on the backside of the acid ring.

While the battery part has been placed in a fluidized bed so that particles can be directed against the beveled side surface of the acid rings other methods of impinging particles against the surface such as in a tumbler where the battery part and harder media are allowed to contact the battery part as the media and the battery part are tumbled about can be used to deform the annular lips on the cast battery part. That is, in another flaring process the use of a deformable material such as a lead or lead alloy allows one can flare or bend the lips on the acid rings to the desired shape through contact of an article or particles with the angled side surfaces on the axially spaced circumferential acid rings.

Figure 4 shows a side elevation view of a different system and method for folding or flaring the annular lips into a container engaging protrusion or sealing region on the terminal. In the embodiment shown the battery terminal 30 contains annular acid rings 31 with a V-shaped groove in the end face. A set of radially displaceable peening or flaring members 35 and 36 are positioned proximate the acid rings. In the embodiment shown the peening member 35 includes curved protrusions 35a, 35b and 35c which are located in the same plane as acid rings 31, 32 and 32. Similarly, peening member 36 includes peening protrusions 36a, 36b and 36c that are located in the same plane as acid rings 31, 32 and 33. The radial inward displacement of member 35 and 36 brings the peening protrusions into engagement with the V-shaped grooves in each of the acid rings which causes the annular lips of the acid rings to be folded outward or flared outward as illustrated in Figure 3 to thereby form a sealing region or a rigid sealing ring on the backside of the acid ring.

Figure 5 shows a bottom view of how a multiple part radial peening member can peen or compress the bifurcated acid rings so each of the acid rings have a lip or protrusion for engaging a container. In the embodiment shown, a first arcuate shaped peening member 42 which is radially postionable through a hydraulic cylinder 42a includes a peening surface 42b that is an alignment with the acid ring 40a. Similarly, positioned around terminal 40 are peening members 41 and 43 that cooperate to form a closed annular peening member that engages and folds or flares the lips on the annular acid ring backward into the hooking or container engaging protrusion illustrated in Figure 3 by radial inward displacement of the peening members into the angled side surfaces of the annular lips on the acid ring. Thus Figure 5 illustrates one method of forming sealing regions on the bifurcated acid rings by directing a member into the V-shaped grooves in the end faces of the bifurcated acid rings.

While the invention has been described in regard to die casting the battery terminal could also be formed from other casting methods or through cold forming.

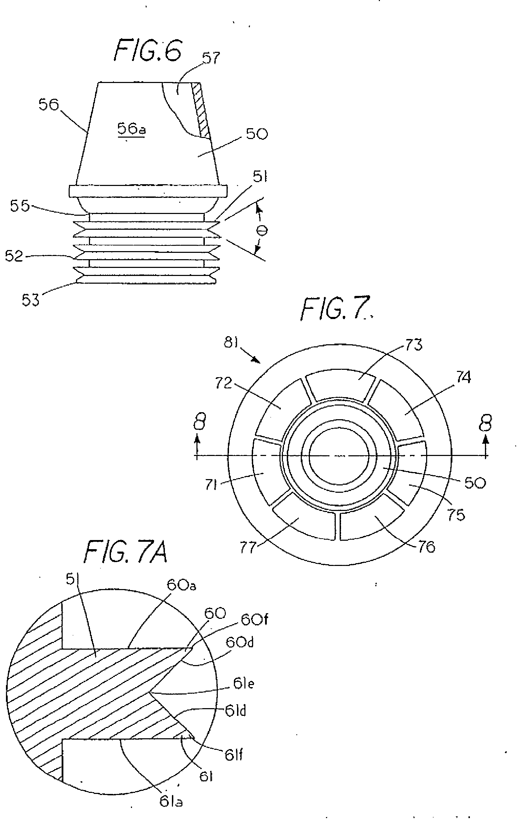

Figure 6 shows a preferred embodiment of the invention comprising a battery part 50 such as a battery terminal with a set of spaced bifurcated acid rings 51, 52 and 53. The bifurcated acid rings extend around the peripheral region of the battery part and can have any number of shapes including circular, hexagonal or the like. Although one acid ring can be sufficient for engagement with a battery container the battery part 50 generally includes at least three lateral spaced acid rings that extend radially outward from the base 55 of battery part 50.

Battery part 50 includes a connector lug 56 having an exterior surface 56a for forming an electrical connection to an external device. In the embodiment shown the battery terminal 50 includes a hollow central opening 57 to permit one to pour molten metal therein to form an electrical connection to an internal battery components such as a battery plate or the like.

Figure 7A shows an isolated view of a portion of bifurcated acid ring 51 to reveal in detail the lip 60 with a first face or lateral face 60a on one side and a second face, namely a beveled end face 60d on the other side of lip 60 with the lateral face 60a and the beveled end face 60d forming an included angle of less than 90 degrees therebetween. Similarly, a second lip 61 includes a first face or lateral face 61a on one side and a second face, namely, a beveled end face 6ld on the opposite side with the lateral face 61a and the beveled end face 61d forming an included angle of less than 90 degrees therebetween. In addition, the beveled face 60d intersects beveled end face 61d at an apex 61e to form a valley or V-shaped groove between the lip 60 on one face of the acid ring and the lip 61 on the opposite face of the acid ring 51.

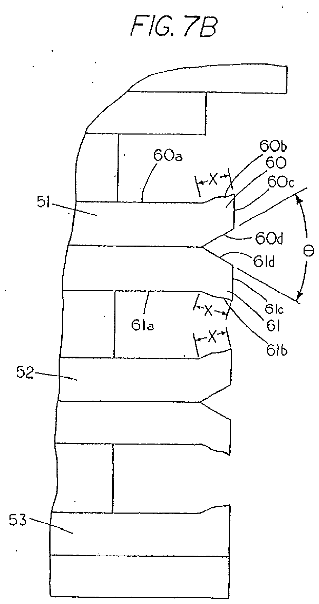

Figure 7B shows acid rings 51, 52 and 52 in a partial view in Figure 7A with the lips in a flared condition to form a lateral sealing region or sealing bead on the lateral faces of the acid rings to thereby enhance the sealing of a battery container to the terminal. The beveled surface 60d of the first lip 60 and the beveled surface 61d of second lip 61 are located at approximately a ninety degree angle to each other although the angle can vary depending on the selection of the angle of the beveled surface for each lip. In the embodiments shown the lips 60 and 61 which were previously in an unflared condition (Figure 7A) and an apex 60f and 61 have been transformed to a flared condition. The lip 60 has a an extended flat surface 60c and lip 61 has an extended flat surface 61c.

While Figure 7A illustrates the acid ring in the unflared condition, Figure 7B shows the acid rings in a flared condition. In the flared condition the lips on the bifurcated acid rings have been flared laterally to form a sealing region or sealing bead along the lateral faces of the acid rings.

Figure 7A shows acid ring 51 in the as cast condition revealing lip 60 and lip 61 in an a straight or unflared condition. In the embodiments shown bifurcated acid ring 51 has a first lateral face 60a and a second lateral face 61 located in a substantially parallel relation ship to each other.

Figure 7B shows bifurcated acid ring 51 in the flared condition. In the flared condition the bifurcated acid ring 51 includes a first circumferential end face 60c and a second circumferential end face 61c separated by a first circumferential beveled end face 60d and a second circumferential beveled end face 61d. In the flared condition a first circumferential sealing region or sealing bead 60b extends around the outer portion of lateral face 60a and a second circumferential sealing region or sealing bead 61b extends around the outer portion of lateral surface 61a. As can be seen in Figure 7B the lip 60c located on the acid ring 51 and the lip 61 located on acid ring 51 have been flared upward to form the respective sealing regions 60b and 61b. The sealing regions have a lateral length denoted by x and extend partially along the lateral faces of the acid ring. Each of the sealing regions extend circumferentially around the battery terminal to provide a 360 degree sealing barrier between the container and the battery container.

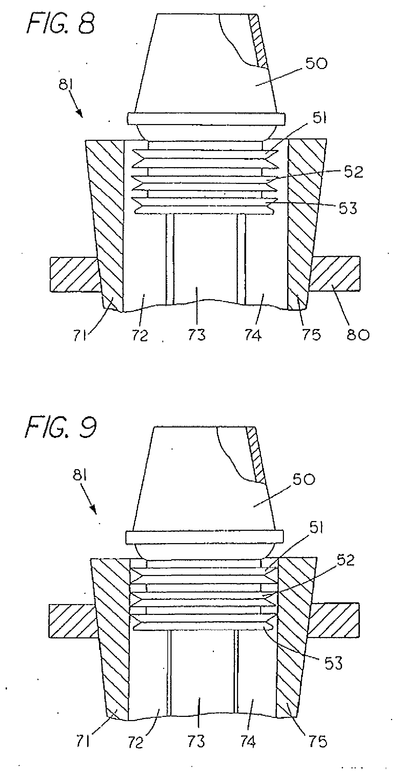

In order to appreciate the transformation of the battery terminal with a bifurcated acid ring into a battery terminal with cantilevered sealing regions reference should be made to Figure 7 and 8 which shows a collet 81 in top view. Figure 8 shows a section view the battery terminal 50 positioned between a set of cantilever mounted splines 71, 72, 73, 74 and 75 on the collet 81. Figures 7-10 illustrate a battery terminal placed in collet 81 and the collet collapsed to radially compress the lips on the acid ring to form a sealing bead on the lateral surface of the bead.

Figure 7 shows a top view of the battery terminal 50 centrally positioned between the splines 71-77 that are cantilevered held in a base member (not shown). A compression collar 80 extends around each of the splines so that when the collar is forced upward the splines are brought radially inward to flare the lips on acid rings 51, 52 and 53.

Figure 8 shows a section view of collet 81 surrounding battery terminal 50 with the splines 71, 72, 73 and 74 in a spaced condition about the bifurcated acid rings 51,52 and 53. If desired a mandrel (not shown) can be inserted into battery terminal 50 to hold the battery terminal in postion.

Figure 9 shows the initial step in the formation of the sealing regions on the bifurcated acid rings 51, 52 and 53. In this condition the splines 71-75 have been brought into contact with the lips on the bifurcated acid rings 51, 52 and 53 while the acid rings are free to self center in the collet.

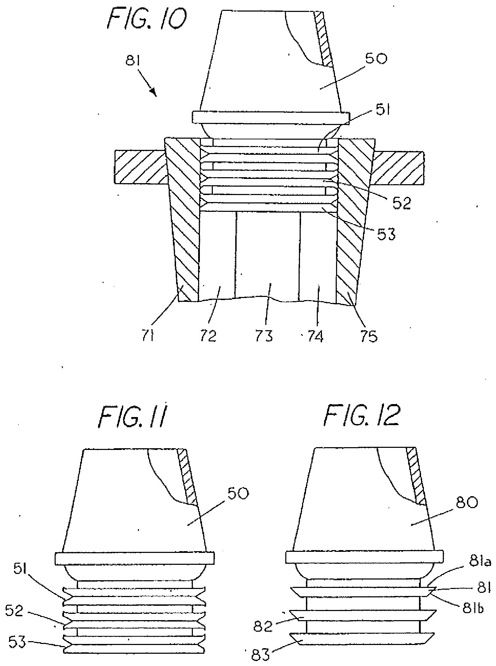

Figure 10 shows the compression step wherein the splines 71-75 have been squeezed radially inward to flare the tips on acid rings 51, 52 and 53 sufficient to form a sealing bead on the lateral surface of each of the lips on the acid rings but insufficient to form the lips into a hook. That is the deformation, which is shown in greater detail in Figure 7B, produces an inclined sealing region or sealing bead that extends along a portion of the backside of the flared lip of the acid ring. In the embodiment shown the radius of curvature of the collet and the radius of curvature of the acid rings are substantially equal so as to produce a uniform flaring of the lip.

Figure 11 shows terminal 50 after compression by collet 81. As can be seen in Figure 11 each of the lips on the acid rings 51, 52 and 53 have been flared to create the sealing regions illustrated in Figure 7B. In contrast to the deformation of the rectangular shaped acid rings as shown in the prior art the compression of the bifurcated acid ring involves only a slight deflecting of the lips to create the sealing bead thus minimizing the stress lines that can be caused by the junction between a cold forming portion on a die cast battery terminal.

Figure 12 is side view of an alternate embodiment of a battery part 80 wherein the acid rings 81, 82 and 83 are formed with a single lip on each acid ring. That is acid ring 81 has a lateral surface 81a and a beveled surface 81b that form an angle of less than 90 degrees and preferably 45 degrees of less so as form a lip that can be flared upward sufficiently to form a sealing bead on the lateral surface 81. In this embodiment the radial compression with the collet will form a top beveled sealing region on each lip to laterally restrain the container and simultaneously form an effective seal that inhibits the loss of electrolyte therepast.

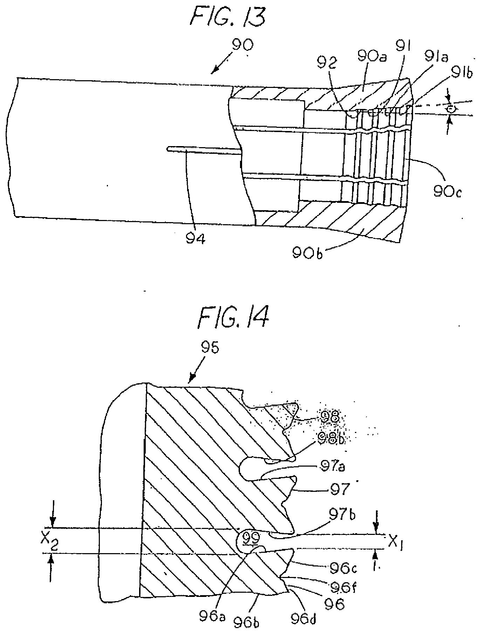

Figure 13 shows a collet 90 having a base with cantilevered sections 90b, 90a and 90c. Located on an inside face of the cantilevered collet sections are a set of annular ridges 91, 91a and 91b.. An annular ridge 91 is adjacent a recess 92 as are the other ridges 91a and 91b also proximate a recess. In the embodiment shown the collet makes an angle 0 with a line parallel to a central axis of the collet. The purpose of the angle in the collet face is to allow one to form acid rings on a battery terminal having a tapered base. The spacing of each of the ridges on collet 90 are such that the ridges align with the V shaped recess in the bifurcated acid ring as illustrated in Figure 4.

Figure 14 shows a partial sectional view of a battery terminal 95 wherein the collet 90 of Figure 13 has been used to compress the bifurcated acid rings 96, 97 and 98. Each of the bifurcated acid rings have been radially compressed to deform the acid rings so as to produce a tear drop shaped recess 99 between adjacent acid rings wherein the lower part of the recess has a width x₂ that is larger than the entry region width x₁ to the recess to thereby form a retaining pocket to received the molten material used to form the container around the battery terminal. As shown in Figure 14 the bifurcated acid ring 96 has an upper curved face 96c and a lower curved face 96d on opposite side of the undeformed portion 96f of the bifurcated acid ring 96 as a result of the acid ring having been deformed radially inward by collet 90. When each of the acid rings are subject to a squeezing by collet 90 the compression results in a smoothly curved surface 96a on the top side of acid ring 96 and a smoothly curved surface 97b on the bottom side of acid ring 97 that coact to form a tear drop shaped recess 99 for locking a battery container thereto. Similarly, the acid ring 98 has been deformed and the lower curved surface 97b coacts with upper curved surface 96a to form a further tear drop shaped pocket therebetween that can trap the molten plastic therein and assist in forming a leakproof seal. As can be seen in Figure 14 each of the acid rings converges from an exterior portion of the acid ring to an internal portion of the acid ring. For example, surface 96c and 96b of acid ring 96 smoothly curve from the outer most portion or entry region to the recess to the inner most point or the bottom of the recess.

While the invention has been shown with circular battery terminals the invention can also be used with battery terminals that are other than circular such as oblong. In those instance a multiple part die as opposed to a collet can be used to deform the bifurcated acid rings into a condition where a retaining pocket is formed between.

## Claims

1. A battery terminal manufacturing system comprising:
a tool assembly including:
a base;
a first forming member movably coupled to the base and having at least a first curved protrusion extending therefrom;
a second forming member movably coupled to the base and having at least a second curved protrusion extending therefrom; and
a part support fixedly attached to the base and positioned between the first and second forming members; and
an unfinished battery terminal removably positioned on the part support, wherein the battery terminal includes at least one annular bifurcated acid ring protruding from an exterior surface thereof and having a first lip spaced apart from a second lip, wherein the first and second forming members move toward each other to receive the battery terminal between the first and second forming members, whereby the first and second protrusions are driven against the unfinished battery terminal between the first and second lips to compress and flare the first and second lips away from each other.

2. The manufacturing system of claim 1, further comprising:
a first driver operably coupled to the first forming member to move the first forming member in a first direction along an axis and drive the first protrusion against a first portion of the acid ring; and
a second driver operably coupled to the second forming member to move the second forming member in a second direction opposite to the first direction along the axis and drive the second protrusion against a second portion of the acid ring.

3. The manufacturing system of claim 2 wherein the first driver includes a hydraulic device that drives the first forming member toward the second forming member, or wherein the first driver includes a first hydraulic device and the second driver includes a second hydraulic device, and wherein the first and second hydraulic devices are configured to simultaneously drive the first and second forming members toward each other to compress at least the first acid ring on the battery terminal.

4. The manufacturing system of claim 2 wherein the first forming member has a first face adjacent to the first forming portion and the second forming member has a second face adjacent to the second forming portion, wherein the first driver includes a first hydraulic device and the second driver includes a second hydraulic device, and wherein the first and second hydraulic devices are configured to simultaneously drive the first and second faces against each other to compress the acid ring on the battery terminal.

5. The manufacturing system of claim 1 wherein the first and second forming members are slidably coupled to the base.

6. The manufacturing system of claim 1 wherein the second forming member is the mirror image of the first forming member.

7. The manufacturing system of claim 1:
wherein the first forming member further includes a third curved protrusion extending therefrom, and the second forming member further includes a fourth curved protrusion extending therefrom;
wherein the at least one annular bifurcated acid ring is a first bifurcated acid ring, and wherein the unfinished battery terminal further includes a second bifurcated acid ring having a third lip spaced apart from a fourth lip;
wherein the first and second protrusions are driven against the first and second lips to flare the first and second lips away from each other; and
wherein the third and fourth protrusions are driven against the third and fourth lips to flare the third and fourth lips away from each other.

8. The manufacturing system of claim 1, further comprising means for moving the first and second forming members toward each other to drive the first and second protrusions against at least a portion of the annular bifurcated acid ring.

9. A method of making a battery part, the method comprising:
casting a battery part having an annular acid ring extending around an exterior portion thereof, the acid ring having a first lip spaced apart from a second lip by a V-shaped groove therebetween;
positioning the battery part between a first forming member and a second forming member;
driving the first forming member in a first axial direction against a first portion of the acid ring; and
while driving the first forming member toward the first portion of the acid ring, driving the second forming member in a second axial direction opposite the first axial direction against a second portion of the acid ring opposite the first portion of the acid ring, wherein driving the first and second forming members against the battery part includes driving first and second curved protrusions into the V-shaped groove to flare the first and second lips apart from each other.

10. The method of claim 9
wherein the first lip has a side surface and an end surface, wherein the end surface forms an acute angle relative to the side surface, and wherein driving the first and second forming members against the battery part includes driving the first and second forming members against the end surface of the first lip to flare the first lip.

11. The method of claim 9 wherein the acid ring is a first acid ring, and wherein casting a battery part further includes casting a second acid ring spaced apart from the first acid ring and having a third lip spaced apart from a fourth lip, and wherein driving the first and second forming members against the battery part includes flaring the third and fourth lips apart from each other.

## Patentansprüche

1. Ein Batterieklemmen-Produktionssystem, das Folgendes umfasst:
einen Werkzeugaufbau, der Folgendes einschließt:
eine Basis,
ein erstes Formglied, das beweglich mit der Basis gekoppelt ist und mindestens einen ersten gekrümmten Vorsprung hat, der sich davon erstreckt,
ein zweites Formglied, das beweglich mit der Basis gekoppelt ist und mindestens einen zweiten gekrümmten Vorsprung hat, der sich davon erstreckt, und
einen Teilträger, der fest an der Basis angebracht und zwischen dem ersten und dem zweiten Formglied positioniert ist; und
eine unfertige Batterieklemme, die lösbar an dem Teilträger positioniert ist, wobei die Batterieklemme mindestens einen verzweigten Säurering einschließt, der von einer Außenfläche derselben vorsteht und eine erste Lippe hat, die von einer zweiten Lippe beabstandet ist, wobei das erste und das zweite Formglied sich zueinander bewegen, um die Batterieklemme zwischen dem ersten und dem zweiten Formglied aufzunehmen, wodurch der erste und der zweite Vorsprung gegen die unfertige Batterieklemme zwischen der ersten und der zweiten Lippe angetrieben werden, um die erste und die zweite Lippe voneinander fort aufzuweiten.

2. Das Produktionssystem gemäß Anspruch 1, das weiter Folgendes umfasst:
ein erstes Antriebselement, das operativ mit dem ersten Formglied gekoppelt ist, um das erste Formglied in eine erste Richtung entlang einer Achse zu bewegen und den ersten Vorsprung gegen einen ersten Abschnitt des Säurerings anzutreiben; und
ein zweites Antriebselement, das operativ mit dem zweiten Formglied gekoppelt ist, um das zweite Formglied in eine zweite Richtung zu bewegen, die der ersten Richtung entlang der Achse entgegengesetzt ist, und den zweiten Vorsprung gegen einen zweiten Teil des Säurerings anzutreiben.

3. Das Produktionssystem gemäß Anspruch 2, wobei das erste Antriebselement eine Hydraulikvorrichtung einschließt, welche das erste Formglied zum zweiten Formglied antreibt, oder
wobei das erste Antriebselement eine erste Hydraulikvorrichtung einschließt und das zweite Antriebselement eine zweite Hydraulikvorrichtung einschließt und wobei die erste und die zweite Hydraulikvorrichtung ausgebildet sind, um das erste und das zweite Formglied gleichzeitig zueinander anzutreiben, um mindestens den ersten Säurering an der Batterieklemme zusammenzudrücken.

4. Das Produktionssystem gemäß Anspruch 2, wobei das erste Formglied eine erste Seite hat, die an den ersten Formabschnitt angrenzt, und das zweite Formglied eine zweite Seite hat, die an den zweiten Formabschnitt angrenzt; wobei das erste Antriebselement eine erste Hydraulikvorrichtung einschließt und das zweite Antriebselement eine zweite Hydraulikvorrichtung einschließt und wobei die erste und die zweite Hydraulikvorrichtung ausgebildet sind, um die erste und die zweite Seite gleichzeitig gegeneinander anzutreiben, um den Säurering an der Batterieklemme zusammenzudrücken.

5. Das Produktionssystem gemäß Anspruch 1, wobei das erste und das zweite Formglied verschiebbar mit der Basis gekoppelt sind.

6. Das Produktionssystem gemäß Anspruch 1, wobei das zweite Formglied das Spiegelbild des ersten Formglieds ist.

7. Das Produktionssystem gemäß Anspruch 1,
wobei das erste Formglied weiter einen dritten gekrümmten Vorsprung einschließt, der sich davon erstreckt, und das zweite Formglied weiter einen vierten gekrümmten Vorsprung einschließt, der sich davon erstreckt;
wobei der mindestens eine verzweigte Säurering ein erster verzweigter Säurering ist und wobei die unfertige Batterieklemme weiter einen zweiten verzweigten Säurering einschließt, der eine dritte Lippe hat, welche von einer vierten Lippe beabstandet ist;
wobei der erste und der zweite Vorsprung gegen die erste und die zweite Lippe gedrückt werden, um die erste und die zweite Lippe voneinander fort aufzuweiten; und
wobei der dritte und der vierte Vorsprung gegen die dritte und die vierte Lippe gedrückt werden, um die dritte und die vierte Lippe voneinander fort aufzuweiten.

8. Das Produktionssystem gemäß Anspruch 1, das weiter Mittel umfasst, um das erste und das zweite Formglied zueinander hin zu bewegen, um den ersten und den zweiten Vorsprung gegen zumindest einen Abschnitt des verzweigten Säurering anzutreiben.

9. Ein Verfahren zur Herstellung eines Batterieteils, das Folgendes umfasst:
das Gießen eines Batterieteils mit einem Säurering, der sich um einen äußeren Abschnitt desselben erstreckt, wobei der Säurering eine erste Lippe hat, die von einer zweiten Lippe durch eine V-förmige Nut dazwischen beabstandet ist;
das Positionieren des Batterieteils zwischen einem ersten Formglied und einem zweiten Formglied;
das Antreiben des ersten Formglieds in eine erste axiale Richtung gegen einen ersten Abschnitt des Säurerings; und
während des Antreibens des ersten Formglieds gegen den ersten Abschnitt des Säurerings, das Antreiben des zweiten Formglieds in eine zweite axiale Richtung, die der ersten axialen Richtung entgegengesetzt ist, gegen einen zweiten Abschnitt des Säurerings, der dem ersten Abschnitt des Säurerings gegenüberliegt, wobei das Antreiben des ersten und des zweiten Formglieds gegen das Batterieteil das Antreiben des ersten und des zweiten gekrümmten Vorsprungs in die V-förmige Nut, um die erste und die zweite Lippe voneinander fort aufzuweiten, einschließt.

10. Das Verfahren gemäß Anspruch 9,
wobei die erste Lippe eine Seitenfläche und eine Endfläche hat, wobei die Endfläche einen spitzen Winkel relativ zur Seitenfläche bildet und wobei das Antreiben des ersten und des zweiten Formglieds gegen das Batterieteil das Antreiben des ersten und des zweiten Formglieds gegen die Endfläche der ersten Lippe, um die erste Lippe aufzuweiten, einschließt.

11. Das Verfahren gemäß Anspruch 9, wobei der Säurering ein erster Säurering ist und wobei das Gießen eines Batterieteils weiter das Gießen eines zweiten Säurerings einschließt, der vom ersten Säurering beabstandet ist und eine dritte Lippe hat, die von einer vierten Lippe beabstandet ist, und wobei das Antreiben des ersten und des zweiten Formglieds gegen das Batterieteil das Aufweiten der dritten und der vierten Lippe voneinander fort einschließt.

## Revendications

1. Système de fabrication de borne de batterie comprenant :
un ensemble d'outil incluant :
une base ;
un premier élément de formage couplé de manière mobile à la base et ayant au moins une première saillie courbée s'étendant depuis celui-ci ;
un second élément de formage couplé de manière mobile à la base et ayant au moins une seconde saillie courbée s'étendant depuis celui-ci ; et
un support de partie lié fixement à la base et positionné entre les premier et second éléments de formage ; et
une borne de batterie inachevée positionnée de manière amovible sur le support de partie, dans lequel la borne de batterie inclut au moins un anneau acide en fourche annulaire faisant saillie depuis une surface extérieure de celle-ci et ayant une première lèvre espacée d'une seconde lèvre, dans lequel les premier et second éléments de formage se déplacent l'un vers l'autre pour recevoir la borne de batterie entre les les premier et second éléments de formage, les première et seconde sailllies étant entrainées contre la borne de batterie inachevée entre les première et seconde lèvres pour comprimer et évaser les première et seconde lèvres en les éloignant l'une de l'autre.

2. Système de fabrication selon la revendication 1, comprenant en outre :
un premier élément d'entraînement couplé de manière fonctionnelle au premier élément de formage pour déplacer le premier élément de formage dans une première direction le long d'un axe et entraîner la première saillie contre une première partie de l'anneau acide ; et
un second élément d'entraînement couplé au second élément de formage pour déplacer le second élément de formage dans une seconde direction opposée à la première direction le long de l'axe et entraîner la seconde saillie contre une seconde partie de l'anneau acide.

3. Système de fabrication selon la revendication 2 dans lequel le premier élément d'entraînement inclut un dispositif hydraulique qui entraine le premier élément de formage vers le second élément de formage, ou
dans lequel le premier élément d'entraînement inclut un premier dispositif hydraulique et le second élément d'entraînement inclut un second dispositif hydraulique, et dans lequel les premier et second dispositifs hydrauliques sont configurés pour entraîner simultanément les premier et second éléments de formage l'un vers l'autre pour comprimer au moins le premier anneau acide sur la borne de batterie.

4. Système de fabrication selon la revendication 1 dans lequel le premier élément de formage a une première face adjacente à la première partie de formage et le second élément de formage a une seconde face adjacente à la seconde partie de formage, dans lequel le premier élément d'entraînement inclut un premier dispositif hydraulique et le second élément d'entraînement inclut un second dispositif hydraulique, et dans lequel les premier et second dispositifs hydrauliques sont configurés pour entraîner simultanément les première et seconde faces l'une contre l'autre pour comprimer l'anneau acide sur la borne de batterie.

5. Système de fabrication selon la revendication 1 dans lequel les premier et second éléments de formage sont couplés de manière coulissante à la base.

6. Système de fabrication selon la revendication 1 dans lequel le second élément de formage est l'image en miroir du premier élément de formage.

7. Système de fabrication selon la revendication 1 :
dans lequel le premier élément de formage inclut en outre une troisième saillie courbée s'étendant depuis celui-ci, et le second élément de formage inclut en outre une quatrième saillie courbée s'étendant depuis celui-ci ;
dans lequel l'au moins un anneau acide en fourche annulaire est un premier anneau acide en fourche, et dans lequel la borne de batterie inachevée inclut en outre un second anneau acide en fourche ayant une troisième lèvre espacée d'une quatrième lèvre ;
dans lequel les première et seconde saillies sont entrainées contre les première et seconde lèvres pour évaser les première et seconde lèvres en les éloignant l'une de l'autre ; et
dans lequel les troisième et quatrième saillies sont entrainées contre les troisième et quatrième lèvres pour évaser les troisième et quatrième lèvres en les éloignant l'une de l'autre.

8. Système de fabrication selon la revendication 1, comprenant en outre des moyens pour déplacer les premier et second éléments de formage l'un vers l'autre pour entraîner les première et seconde saillies contre au moins une partie de l'anneau acide en fourche annulaire.

9. Procédé de fabrication d'une partie de batterie, le procédé comprenant :
de mouler une partie de batterie ayant un anneau acide annulaire s'étendant autour d'une partie extérieure de celle-ci, l'anneau acide ayant une première lèvre espacée d'une seconde lèvre par une rainure en forme de V entre elles ;
de positionner la partie de batterie entre un premier élément de formage et un second élément de formage ;
d'entraîner le premier élément de formage dans une première direction axiale contre une première partie de l'anneau acide ; et
lors de l'entraînement du premier élément de formage vers la première partie de l'anneau acide, d'entraîner le second élément de formage dans une seconde direction axiale opposée à la première direction axiale contre une seconde partie de l'anneau acide opposée à la première partie de l'anneau acide, dans lequel entraîner les premier et second éléments de formage contre la partie de batterie inclut d'entraîner des première et seconde saillies courbées dans la rainure en forme de V pour évaser les première et seconde lèvres en les éloignant l'une de l'autre.

10. Procédé selon la revendication 9 dans lequel la première lèvre a une surface latérale et une surface d'extrémité, dans lequel la surface d'extrémité forme un angle aigu relativement à la surface latérale, et dans lequel entraîner les premier et second éléments de formage contre la partie de batterie inclut d'entraîner les premier et second éléments de formage contre la surface d'extrémité de la première lèvre pour évaser la première lèvre.

11. Procédé selon la revendication 9 dans lequel l'anneau acide est un premier anneau acide, et dans lequel mouler une partie de batterie inclut en outre de mouler un second anneau acide espacé du premier anneau acide et ayant une troisième lèvre espacée d'une quatrième lèvre, et dans lequel entraîner les premier et second éléments de formage contre la partie de batterie inclut d'évaser les troisième et quatrième lèvres en les éloignant l'une de l'autre.
